# EUROPÄISCHE PATENTSCHRIFT

(11) **EP 1 124 051 B1**
(45) Veröffentlichungstag und Bekanntmachung des Hinweises auf die Patenterteilung: **21.11.2007**
(21) Anmeldenummer: 01101851.2
(22) Anmeldetag: 26.01.2001
(51) Int. Cl.: F02D 41/02

(54) **Verfahren und Vorrichtung zur Desulfatisierung eines NOx-Speicherkatalysators mit NOx-Sensor**
Method and device for desulphating a nox accumulator catalyst with nox-sensor
Procédé et dispositif pour la désulfatation d'un catalyseur accumulateur de nox avec capteur de nox

(30) Priorität: 08.02.2000 DE 10005474
(43) Veröffentlichungstag der Anmeldung: 16.08.2001
(73) Patentinhaber: Bayerische Motoren Werke Aktiengesellschaft, 80809 München (DE)
(72) Erfinder: Ramatschi, Stephan, 85604 Zorneding (DE); Müller, Peter, 81673 München (DE); Detterbeck, Stefan, 80804 München (DE); Milanovic, Igor, 81545 München (DE)

(56) Entgegenhaltungen:
- EP-A- 0 911 498
- WO-A-99/53176
- DE-C- 19 830 829

## Beschreibung

Die Erfindung betrifft ein Verfahren und eine Vorrichtung gemäß der im Oberbegriff des Patentanspruch 1 genannten Art.

Eine Möglichkeit den Brennstoffverbrauch von Brennkraftmaschinen zu reduzieren ist der magere Motorbetrieb. Dies bedeutet, die Brennkraftmaschine wird nicht mit einem stöchiometrischen Verhältnis von Luft und Brennstoff betrieben, sondern mit Luftüberschuß. Bei dieser Betriebsart können die Stickoxid-Emissionen (NOₓ) bei Verwendung eines heute üblichen Dreiwegekatalysator nicht reduziert werden, sodass die gesetzlich vorgegebenen Abgasgrenzwerte nicht einhaltbar sind. Aus diesem Grund werden zur Abgasnachbehandlung bei magerem Motorbetrieb Stickoxidspeicherkatalysatoren eingesetzt. Diese speichern die von der Brennkraftmaschine emittierten NOₓ-Rohemissionen während des Motormagerbetriebs zwischen. Nach einiger Zeit wird die Brennkraftmaschine fett betrieben, um die gespeicherten Stickoxide wieder frei zu setzen und chemisch in unschädliche Stoffe umzuwandeln. Als fetter Motorbetrieb wird ein Motorbetrieb mit Brennstoffüberschuß bezeichnet.

Heute üblicherweise verwendete Brennstoffe und Motorschmiermittel beinhalten neben den gewünschten Kohlenwasserstoffketten auch nicht erwünschte Bestandteile. Hierzu zählt neben anderen der Schwefel und dessen chemischen Verbindungen. Beim Motorbetrieb wird Schwefel in Form von Schwefeldioxid (SO₂) von der Brennkraftmaschine ausgestoßen. Problematisch für die neuen Beschichtungen von NOₓ-Speicherkatalysatoren ist deren Anfälligkeit für eine Schwefelvergiftung durch Sulfatbildung in und auf dem Katalysatormaterial. Als Folge der Schwefelvergiftung nimmt die Speicherkapazität des NOₓ-Speicherkatalysators für Stickoxide bis zur Unwirksamkeit ab.

In der DE 198 59 462 A1 wird ein Verfahren zur Desulfatisierung und eine entsprechende Vorrichtung dafür vorgeschlagen. Zur Verwendung kommen hier Sauerstoffsensoren (O₂), mit denen die Katalysatoreffizienz ermittelt wird. Für den Fall einer notwendigen Desulfatisierung wird die Katalysatortemperatur erhöht und der Motor anschließend mit fest vorgegebenen Zeitintervallen abwechselnd fett und mager -Wechseldesulfatisierung- betrieben bis die Desulfatisierung abgeschlossen ist.

Nachteilig an dieser Lösung ist, dass die NOₓ-Katalysatoreffizienz aufwendig mit zwei Sensoren ermittelt wird und dass der Grad der Entschwefelung des NOₓ-Speicherkatalysators während der Desulfatisierung nicht ermittelt werden kann. Folge hieraus ist eine ungenau bestimmbare Desulfatisierungsdauer, die zu erhöhtem Brennstoffverbrauch aufgrund zu langer Desulfatisierungsdauer führt und die Alterung des NOₓ-Katalysators beschleunigen kann.

Aufgabe ist es, ein Verfahren und eine Vorrichtung zur Desulfatisierung von NOₓ-Speicherkatalysatoren darzustellen, die es ermöglichen, die Desulfatisierung derart durchzuführen, dass mit einem Sensor auch während der Desulfatisierung der Verschwefelungsgrad des NOₓ-Speicherkatalysators festgestellt werden kann und nur so lange desulfatisiert wird, wie es zur Wiederherstellung eines ausreichenden Katalysatorwirkungsgrades erforderlich ist. Ausserdem soll die Desulfatisierung so durchgeführt werden, dass kein Schwefelwasserstoff (H₂S) entsteht.

Die Aufgabe wird erfindungsgemäß verfahrensmäßig durch die Merkmale von Patentanspruch 1 und vorrichtungsmäßig durch die Merkmale von Patentanspruch 2 gelöst.

Dem Grundgedanken der Erfindung liegen Messungen zugrunde die bestätigen, dass mit einem NOₓ-Sensor indirekt die von einem NOₓ-Speicherkatalysator während der Desulfatisierung emittierten Schwefeldioxidkonzentation (SO₂) nachgewiesen werden. Dieser Effekt wird ausgenutzt, um den Grad der Desulfatisierung eines NOₓ-Speicherkatalysators zu bestimmen. Diese Bestimmung ist unabhängig vom Schwefelgehalt im Brennstoff.

Durch Messung der NOₓ-Konzentration in Strömungsrichtung nach dem NOₓ-Speicherkatalysator wird, stellvertretend für die SO₂-Konzentation im Verbrennungsabgas nach dem NOₓ-Speicherkatalysator, während einer Desulfatisierung ein Abbruchzeitpunkt für diese durch Unterschreiten eines definierten zweiten Sollwertes festgelegt. Vorteilhaft zur Bestimmung des Desulfatisierungsgrades des NOₓ-Speicherkatalysators ist die Durchführung einer NOₓ-Messung anstelle einer aufwendigen SO₂-Konzentrationsmessung im Verbrennungsabgas. Das hier dargelegte Verfahren gestattet eine bedarfsgerechte Desulfatisierung, unabhängig vom Schwefelgehalt des Brennstoffs, direkt abgeleitet aus der NOₓ-Konzentration im Verbrennungsabgas nach dem NOₓ-Speicherkatalysator. Dies führt zu weiterer Brennstoffersparnis, da die Desulfatisierung nur so lang, wie es bis zur Wiederherstellung der notwendigen NOₓ-Katalysatoreffizenz notwendig ist, durchgeführt wird. Hieraus leitet sich wiederum vorteilhaft, eine längere Katalysatorlebensdauer ab, da sowohl eine übermäßige Verschwefelung als auch ein zu langer Betrieb mit Temperaturerhöhung im NOₓ-Speicherkatalysator vermieden wird. Die Temperaturerhöhung kommt unter anderem durch eine exotherme Reaktion im NOₓ-Speicherkatalysator zustande. Sie unterstützt zusätzlich den Schwefelabbau. Zusätzlich wird eine gleichbleibend hohe NOₓ-Umsetzungsrate des Speicherkatalysators über seine gesamte Lebensdauer realisiert.

Positiv nach Anspruch 4 ist die Verwendung eines Kombinationssenors, der neben NOₓ auch O₂ misst. Dies bedeutet, dass für den Magerbetrieb die heute üblichen O₂-Sensoren (Lambda-Sonde für λ-Messung) für Dreiwegekatalysatoren durch einen Kombinationssensor ersetzbar sind.

Weitere Einzelheiten eines bevorzugten Ausführungsbeispieles sind aus den fünf beigelegten Zeichnungen zu entnehmen. Es stellen im Einzelnen dar:
Fig. 1: Prinzipaufbau zum Betrieb einer Brennkraftmaschine zur Desulfatisierung eines Stickoxidspeicherkatalysators
Fig. 2: Zeitlicher Verlauf von Schwefeldioxid- und Schwefelwasserstoffemission während einer kontinuierlichen Desulfatisierung
Fig. 3: Zeitlicher Verlauf von Schwefeldioxid- und Stickoxid-Emission während einer Wechseldesulfatisierung
Fig. 4: Flussdiagramm zur Erkennung einer Schwefelvergiftung
Fig. 5: Flussdiagramm zur bedarfsgerechten Beendung einer Wechseldesulfatisierung

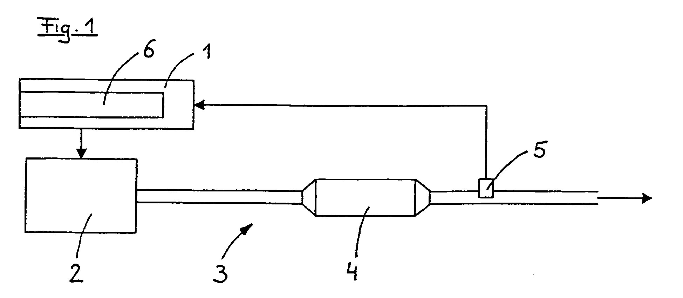

Fig. 1 zeigt eine von einem elektronischen Steuergerät 1 gesteuerte mehrzylindrige Brennkraftmaschine 2, die für mageren Motorbetrieb ausgelegt ist. Die Verbrennungsabgase werden durch eine Abgasanlage 3 abgeleitet. Ein in der Abgasanlage 3 angeordneter NOₓ-Speicherkatalysator 4 reinigt die Verbrennungsabgase von Stickoxiden. Ein NOₓ-Sensor 5, in Strömungsrichtung hinter dem NOₓ-Speicherkatalysator 4 angeordnet, misst die NOₓ-Emissionen im Verbrennungsabgas. Das Steuergerät 1 verwendet das Sensorausgangssignal zur Motorsteuerung, um den NOₓ-Speicherkatalysator 4 vor einer unzulässig starken Verschwefelung zu schützen und ihn bedarfsgerecht zu desulfatisieren. Das Steuergerät 1 verfügt über einen Speicher mit Sollwerten 6.

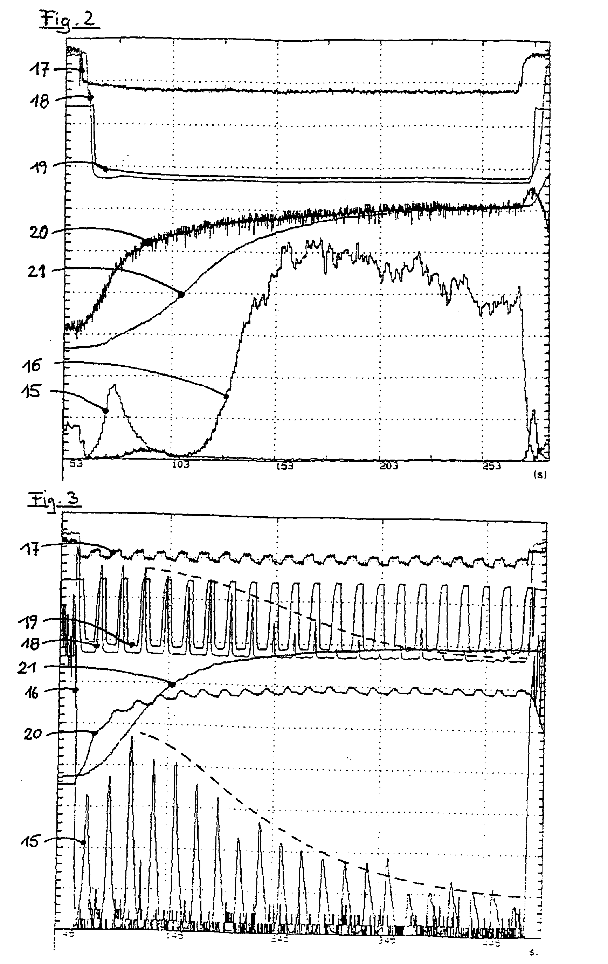

Fig. 2 zeigt einen zeitlichen Verlauf von Schwefeldioxid-Emissionen 15, Schwefelwasserstoff-Emissionen 16, Luftverhältnis λ 17, Stickoxid-Emissionen 18 gemessen nach dem NOₓ-Speicherkatalysator 4, Temperaturen des Verbrennungsabgases 21 im NOₓ-Speicherkatalysator 4, die Stickoxid-Konzentrationen 19 und Temperaturen des Verbrennungsabgases 20 gemessen vor dem NOₓ-Speicherkatalysator 4, während einer kontinuierlichen Desulfatisierung. Gemessen sind die Werte an einer saugrohreinspritzenden 6-zylindrigen Brennkraftmaschine bei 3250 1/min. Die Desulfatisierung wird ausschließlich durch fetten Motorbetrieb - keine Wechseldesulfatisierung - durchgeführt. Auf der X-Achse ist der Zeitverlauf in Sekunden ersichtlich, die Y-Achse zeigt die relative Amplitude der Messwerte. Die Desulfatisierung beginnt bei etwa 55 Sekunden, das Luftverhältnis λ 17 sinkt. Der Temperaturverlauf 20 des Verbrennungsabgases in Strömungsrichtung vor dem NOₓ-Speicherkatalysator 4 steigt schneller an als der Temperaturverlauf 21 des Verbrennungsabgases im NOₓ-Speicherkatalysator 4. Die Schwefeldioxid-Emission 15 erreicht nach etwa 15 Sekunden ein Maximum, und fällt dann wieder auf ein niedriges Niveau ab. Wenige Sekunden später steigt die Schwefelwasserstoff-Emission 16 stark an. Wie in der Aufgabe dargestellt ist dies der Zeitpunkt zu dem die Desulfatisierung abgebrochen werden muß, wenn kein Schwefelwasserstoff emittiert werden darf.

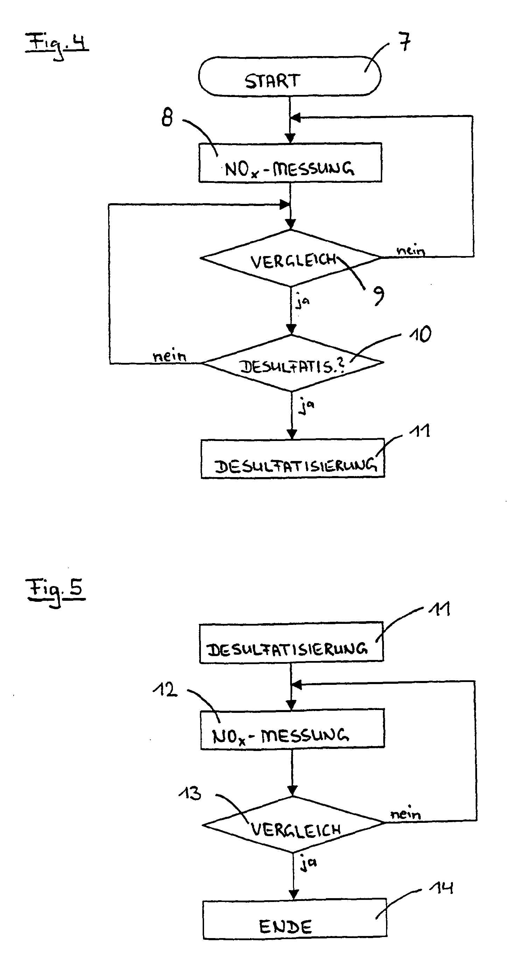

Fig. 3. zeigt eine Simultanmessung während einer Wechseldesulfatisierung. Über der Zeitachse in Sekunden sind wie in Fig. 2, die an den selben Messstellen ermittelten Messwerte, aufgetragen. Die Emissionen sind aufgrund von messsystembedingten Signallaufzeiten gegenüber dem Luftverhältnis λ 17 um ca. 10 Sekunden nach spät verschoben.

Die Wechseldesulfatisierung wird durch abwechselnd fetten und mageren Motorbetrieb realisiert, gut erkennbar an den Stickoxid-Emissionen 18 und dem Luftverhältnis λ 17. Der Beginn der Wechseldesulfatisierung liegt bei etwa 50 Sekunden. Deutlich erkennbar ist in jeder fetten Phase das Ansteigen der Schwefeldioxid-Emission 15, die auf einen Schwefelaustrag aufgrund der Desulfatisierung hinweist. In jeder mageren Phase ist eine erhöhte Stickoxid-Emission 18 erkennbar. Ein Teil der Stickoxid-Konzentration 19 die vor dem NOₓ-Speicherkatalysator 4 vorhanden sind, passieren diesen. Die Temperatur des Verbrennungsabgases 21 im NOₓ-Speicherkatalysator 4 zeigt auf Grund der Wechseldesulfatisierung ab ca. 120 Sekunden nach Messbeginn eine höhere Temperatur als vor diesem 20. Bei Betrachtung der Einhüllenden der Verläufe von Schwefeldioxid- 15 und Stickoxid-Emission 18 fällt der gemeinsame Anstieg und der gemeinsame Abfall der Schwefeldioxid- 15 und Stickoxid-Emission 18 ab etwa 100 Sekunden auf. Hieraus ist ersichtlich, dass die Messung der Stickoxid-Emission 18 repräsentativ für die Schwefeldioxid-Emissionen 15 ist. Wenn die Stickoxid-Emission 18 klein wird kann daraus gefolgert werden, dass der Schwefel weitestgehend aus dem NOₓ-Speicherkatalysator 4 abgebaut ist. Unterschreitet die Stickoxid-Emission 18 während einer Desulfatisierung einen zweiten Sollwert, wird die Desulfatisierung abgebrochen.

Fig. 4 zeigt ein Flussdiagramm zur Erkennung einer Schwefelvergiftung des NOₓ-Speicherkatalysators 4 mit dem NOₓ-Sensor 5, angeordnet nach dem NOₓ-Speicherkatalysator 4. Mit dem Starten 7 der Brennkraftmaschine 2 beginnt die NOₓ-Messung 8. Der NOₓ-Sensor 5 misst die NOₓ-Konzentration im Verbrennungsabgas. Das Steuergerät 1 führt einen Sollwertvergleich 9 zwischen dem Sensorausgangssignal und mit einem aus dem Speicher mit Sollwerten 6 ausgelesenen ersten Sollwert durch. Der erste Sollwert ist abhängig von dem aktuellen Betriebspunkt der Brennkraftmaschine 2. Überschreitet das Sensorausgangssignal den ersten Sollwert nicht, so läuft die NOₓ-Messung 8 weiter. Überschreitet das Sensorausgangssignal den Sollwert, dann überprüft das Steuergerät 1, ob der momentane Betriebszustand der Brennkraftmaschine 2 eine Desulfatisierung 11 zuläßt. Ist keine Desulfatisierung 11 möglich, überprüft das Steuergerät 1 weiterhin das Sensorausgangssignal auf Überschreitung des ersten Sollwertes und die Möglichkeit einer Desulfatisierung 11. Erlaubt der Betriebszustand der Brennkraftmaschine 2 eine Desulfatisierung 11, so wird diese gestartet.

Fig. 5 zeigt ein Flussdiagramm für die bedarfsgerechte Beendung einer Wechseldesulfatisierung mit dem NOₓ-Sensor 5 und dem Steuergerät 1. Die Brennkraftmaschine 2 befindet sich im Betriebszustand Wechseldesulfatisierung 11, das heißt die Desulfatisierung läuft bereits. Der NOₓ-Sensor 5 misst die Stickoxid-Emission 18 nach dem NOₓ-Speicherkatalysator 4 während eines mageren Motorbetriebs. Der magere Motorbetrieb dauert zwischen einer und dreißig Sekunden, abhängig von der verwendeten katalytischen Beschichtung; der fette Motorbetrieb dauert ebenfalls zwischen einer und dreißig Sekunden, abhängig von der verwendeten katalytischen Beschichtung, und wird vor Eintritt der Bildung von Schwefelwasserstoff beendet. Das Steuergerät 1 führt in jeder Magerphase während der Wechseldesulfatisierung einen Sollwertvergleich 13 zwischen dem Sensorausgangssignal und einem aus dem Speicher mit Sollwerten 6 ausgelesenen zweiten Sollwert durch. Überschreitet das Sensorausgangssignal den zweiten Sollwert, wird die Wechseldesulfatisierung 11 fortgesetzt. Unterschreitet das Sensorausgangssignal den zweiten Sollwert, so beendet das Steuergerät 1 die Wechseldesulfatisierung 14. Die Brennkraftmaschine 2 kann wieder im mageren Motorbetrieb betrieben werden

### Bezugszeichenliste:

- 1.: Steuergerät mit Speicher
- 2.: Brennkraftmaschine
- 3.: Abgasanlage
- 4.: NOₓ-Speicherkatalysator
- 5.: NOₓ-Sensor
- 6.: Speicher mit Sollwerten
- 7.: Start
- 8.: NOₓ-Messung
- 9.: Sollwertvergleich
- 10.: Entscheidung Desulfatisierung möglich
- 11.: Desulfatisierung
- 12.: NOₓ-Messung
- 13.: Sollwertvergleich
- 14.: Ende der Desulfatisierung
- 15.: Schwefeldioxid-Emission
- 16.: Schwefelwasserstoff-Emission
- 17.: Luftverhältnis λ
- 18.: Stickoxid-Emission nach NOₓ-Speicherkatalysator
- 19.: Stickoxid-Konzentration vor NOₓ-Speicherkatalysator
- 20.: Temperatur des Verbrennungsabgases vor dem NOₓ-Speicherkatalysator
- 21.: Temperatur des Verbrennungsabgases in dem NOₓ-Speicherkatalysator

## Patentansprüche

1. Verfahren zum Betrieb einer Brennkraftmaschine zur Desulfatisierung eines in einer Abgasanlage angeordneten NOₓ-Speicherkatalysators durch zyklischen Wechsel des Luftverhältnisses,
**dadurch gekennzeichnet, dass**
- die NOₓ-Konzentration im Verbrennungsabgas fortlaufend oder intermittierend nach dem NOₓ-Speicherkatalysator gemessen (8) und mit einem ersten Sollwert verglichen (9) wird,
- bei Überschreitung des ersten Sollwertes abhängig vom Motorbetriebspunkt (10) eine Desulfatisierung eingeleitet (11) wird,
- während der Desulfatisierung (11) in jeder Magerphase die NOₓ-Konzentration gemessen (12) und mit einem zweiten Sollwert verglichen (13) wird,
- bei Unterschreitung des zweiten Sollwertes die Desulfatisierung gestoppt (14) wird.

2. Vorrichtung zur Durchführung des Verfahrens nach Anspruch 1,
**dadurch gekennzeichnet, dass** ein NOₓ-Sensor (5) in Strömungsrichtung nach dem NOₓ-Speicherkatalysator (4) angeordnet und mit einem Steuergerät (1) verbunden ist, mit dem die Steuerung der Desulfatisierung in Abhängigkeit von dem NOₓ-Sensorausgangssignal durchführbar ist
wobei das Steuergerät Mittel aufweist, die die gemessene
Nox-Konzentration mit einem ersten Sollwert vergleichen und die bei Überschreitung des ersten Sollwertes abhängig vom Motorbetriebspunkt (10) eine Desulfatisierung einleiten , und die
während der Desulfatisierung (11) in jeder Magerphase die gemessene NOx-Konzentration mit einem zweiten Sollwert vergleichen und
bei Unterschreitung des zweiten Sollwertes die Desulfatisierung abbrechen.

3. Vorrichtung nach Anspruch 2,
**dadurch gekennzeichnet, dass** die für die Desulfatisierung notwendigen ersten und zweiten Sollwerte in einem Speicher mit Sollwerten (6) abgelegt und vom Steuergerät (1) auslesbar sind.

4. Vorrichtung nach mindestens einem der zuvor genannten Ansprüche,
**dadurch gekennzeichnet, dass** der NOₓ-Sensor (5) mit einem Sauerstoffsensor in einem gemeinsamen Gehäuse kombinierbar ist.

## Claims

1. A method of operating an internal combustion engine for desulphation of an NOₓ storage catalytic converter disposed in an exhaust system by cyclic change of the air ratio,
**characterised in that**
- the NOₓ concentration in the exhaust gas is continuously or intermittently measured (8) downstream of the NOₓ storage catalytic converter and compared with a first threshold value (9),
- if the first threshold is exceeded, desulphation is begun (11) in dependence on the engine operating point (10),
- during desulphation (11) the NOₓ concentration is measured (12) in each lean phase and compared with a second set value (13) and
- if the second set value is not reached, desulphation is stopped (14).

2. A method of working the method according to claim 1,
**characterised in that** an NOₓ sensor (5) is disposed behind the NOₓ storage catalytic converter (4) in the flow direction and is connected to a control unit (1) for controlling the desulphation in dependence on the NOₓ sensor output signal, wherein
the control unit comprises means which compare the measured NOₓ concentration with a first set value and start desulphation, depending on the engine operating point (10), if the first set value is exceeded, and during desulphation (11) in each lean phase the measured NOₓ concentration is compared with a second set value and desulphation is stopped if the second set value is not reached.

3. A device according to claim 2,
**characterised in that** the first and second set values required for desulphation are deposited in a set-value memory (6) and can be read out by the control unit (1).

4. A device according to at least one of the previous claims,
**characterised in that** the NOₓ sensor (5) is combinable with an oxygen sensor in a common casing.

## Revendications

1. Procédé servant à faire fonctionner un moteur à combustion interne pour la désulfatation d'un catalyseur accumulateur de NOₓ, disposé dans un système d'échappement, par changement cyclique du rapport d'air,
**caractérisé en ce que**
- on mesure la concentration de NOₓ dans le gaz de combustion de façon continue ou intermittente (8) après le catalyseur accumulateur de NOx et on la compare à une première valeur de consigne (9) ;
- si la concentration est supérieure à la première valeur de consigne, on initie une désulfatation (11) en fonction du point de fonctionnement du moteur (10) ;
- durant la désulfatation (11), on mesure la concentration de NOₓ (12) au cours de chaque phase pauvre et on la compare à une seconde valeur de consigne (11) ;
- si la concentration est inférieure à la seconde valeur de consigne, la désulfatation est arrêtée (14).

2. Dispositif servant à exécuter le procédé selon la revendication 1,
**caractérisé en ce qu'**
un capteur de NOₓ (5) est disposé après le catalyseur accumulateur de NOₓ (4) suivant la direction d'écoulement, et est relié à un appareil de commande (1) permettant de commander la désulfatation en fonction du signal de sortie du capteur de NOₓ,
l'appareil de commande présente des moyens :
- qui comparent la concentration de NOₓ mesurée à une première valeur de consigne et, si celle-ci est supérieure à la première valeur de consigne, introduisent une désulfatation en fonction du point de fonctionnement du moteur (10), et
- qui, durant la désulfatation (11), au cours de chaque phase pauvre, comparent la concentration de NOₓ mesurée à une seconde valeur de consigne et, si celle-ci est inférieure à la seconde valeur de consigne, arrêtent la désulfatation.

3. Dispositif selon la revendication 2,
**caractérisé en ce que**
les première et seconde valeurs de consigne, nécessaires pour la désulfatation sont stockées dans une mémoire comportant des valeurs de consigne (6) et peuvent être lues par l'appareil de commande (1).

4. Dispositif selon au moins l'une des revendications précédentes,
**caractérisé en ce que**
le capteur de NOₓ (5) peut être combiné avec un capteur d'oxygène dans un boîtier commun.
